**Europäisches Patentamt**

(19) **European Patent Office**

**Office européen des brevets**

(11) Numéro de publication: **0 162 485**
**B1**

(12) # FASCICULE DE BREVET EUROPÉEN

(45) Date de publication du fascicule du brevet:
18.05.88

(51) Int. Cl.⁴: **F 16 B 41/00,** F 16 B 21/18

(21) Numéro de dépôt: **85200331.8**

(22) Date de dépôt: **08.03.85**

(54) **Dispositif de fixation imperdable et partie constitutive.**

(30) Priorité: **25.04.84 FR 8406904**

(43) Date de publication de la demande:
**27.11.85 Bulletin 85/48**

(45) Mention de la délivrance du brevet:
**18.05.88 Bulletin 88/20**

(84) Etats contractants désignés:
**BE CH DE GB IT LI NL SE**

(56) Documents cité:
**FR-A-1 506 796**
**US-A-3 508 774**

(73) Titulaire: **MECAERO S.A., Zone Industrielle de Marclan B.P. 313, F-31604 Muret Cédex (FR)**

(72) Inventeur: **Dubech, Gérard, 51, rue des Paradoux, F-31000 Toulouse (FR)**

(74) Mandataire: **Barre, Philippe, Cabinet Barre- Gatti-Laforgue 95 rue des Amidonniers, F-31069 Toulouse Cédex (FR)**

EP 0 162 485 B1

## Description

L'invention concerne un dispositif de fixation du type imperdable comportant une rétention de sécurité apte à éviter un dégagement accidentel du dispositif par rapport au trou de l'assemblage; l'invention s'étend à une bague annulaire constituant une des parties constitutives du dispositif.

L'invention s'applique à des dispositifs du type boulons, vis, axes, ... comprenant un organe doté d'une tige généralement cylindrique; elle vise plus particulièrement des dispositifs dont l'organe est doté à une extrémité d'un filetage en vue de la mise en place d'un écrou ou d'un système d'écrous; toutefois elle peut également s'appliquer à des organes non dotés de filetage.

Dans certains secteurs techniques et en particulier dans le domaine aéronautique, il est essentiel de prévoir sur les boulons des sécurités évitant un dégagement du boulon par rapport au trou de l'assemblage en cas de desserrage accidentel du système d'écrous notamment sous l'effet de vibrations. Ainsi, dans le document FR-A-1 506 796, il est décrit un boulon doté à la base de son filetage d'une gorge dans laquelle est insérée une bague annulaire à base cylindrique, fendue transversalement pour lui conférer une faculté de déformation élastique dans le sens circonférentiel. (Dans tout ce qui suit, le terme "transversal" se réfère à la bague et non à l'organe qui la porte).

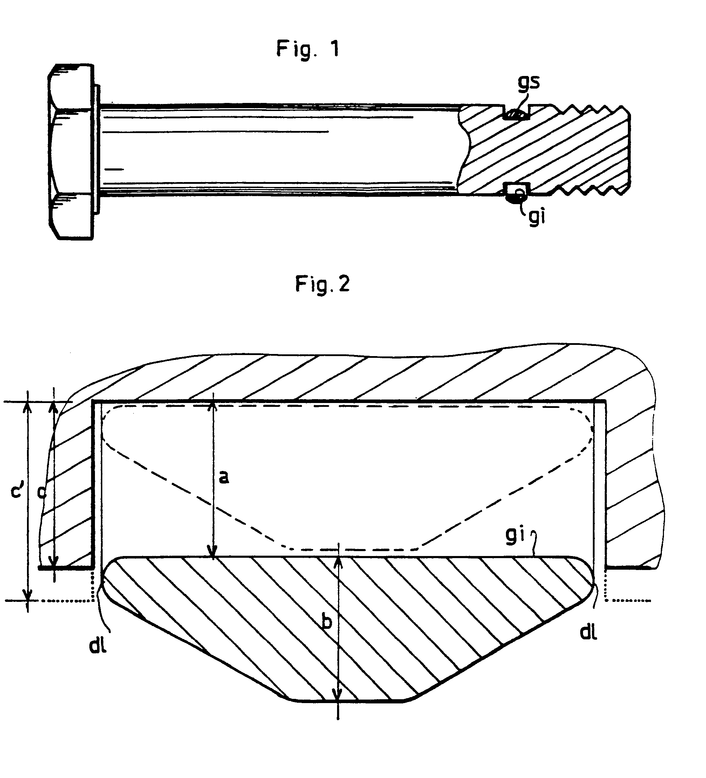

La figure 1 des dessins annexés illustre un des dispositifs de ce type, qui est actuellement le plus couramment utilisé en aéronautique; la figure 2 est une coupe de détail de ce dispositif connu. La bague se présente sous la forme d'un anneau de section pleine et de base cylindrique, qui est agencé dans la gorge du boulon, de façon à pouvoir, dans un état de repos, venir en saillie par rapport à la surface de la tige et, dans un état comprimé, se trouver effacé à l'intérieur de la gorge. Ainsi, une telle bague autorise la mise en place du boulon dans le trou de l'assemblage, en exerçant sur le boulon une force de pénétration qui provoque, par compression radiale dans le trou, une rétraction de la bague à l'intérieur de sa gorge. Une fois le trou traversé, la bague revient au repos par le jeu de son élasticité circonférentielle et assure la rétention du boulon dans le trou.

A titre d'illustration, aux figures 1 et 2 on a représenté en traits pleins la bague à l'état de repos en supposant qu'elle reposait sur le fond de la gorge par la génératrice supérieure gs de sa base cylindrique (sa génératrice inférieure opposée gi étant donc celle qui se trouve la plus éloignée du fond); par ailleurs on a représenté en traits discontinus à la figure 2 la position de la bague à l'état comprimé.

Pour autoriser un effacement complet de la bague dans sa gorge, on conçoit que la distance -a- qui sépare la génératrice gi et le fond de la gorge doit être supérieure à la hauteur -b- de la section de la bague; pour une bague donnée, cette distance -a- ne peut donc pas être réduite à volonté par le fabricant.

Dans ces conditions, il n'est pas possible de concilier deux impératifs techniques souhaités par les constructeurs aéronautiques:

. d'une part, ménager une gorge de profondeur -c- aussi réduite que possible afin de ne pas amoindrir la résistance du boulon à ce niveau (qui est proportionnelle au carré du diamètre de la partie pleine),

. d'autre part, écarter les risques d'arrachement de la bague lors de l'introduction dans le trou ou lors de l'extraction de celui-ci, ce qui implique que les bords latéraux dl de celle-ci soient logés à l'intérieur de la gorge sur toute la périphérie de la bague afin que lesdits bords ne viennent pas buter et s'accrocher contre les bords du trou lors de cette introduction ou de cette extraction.

Comme l'illustre la figure 2, si pour remplir la première condition, on réalise une gorge de faible profondeur -c- (inférieure ou de l'ordre de la distance -a-), les bords dl viennent nécessairement en saillie à l'extérieur de la bague sur certaines parties de son pourtour et la deuxième condition n'est pas remplie; si au contraire, pour remplir la seconde condition, on réalise une gorge plus profonde, à diamètre de boulon égal (profondeur -c'- en pointillés à la figure 2), on amoindrit la résistance mécanique au niveau de la gorge par rapport à la résistance des autres parties de la tige.

La première condition est essentielle sur le plan de la résistance de l'assemblage; en effet, notamment dans le cas de boulons filetés, les ruptures interviennent le plus fréquemment au voisinage de l'orifice du trou à la base du filetage; c'est précisément à cet emplacement que se trouve la gorge et toute réduction de résistance à ce niveau est extrêmement préjudiciable à la résistance mécanique de l'assemblage.

La seconde condition est importante car les risques d'arrachement de la bague conduisent, en premier lieu, à des pertes de temps lors de l'introduction des boulons et, également, à une diminution de la sécurité puisqu'un pourcentage non négligeable de boulons se trouve dépourvu de bagues après quelques utilisations et que ce défaut peut passer inaperçu pour certains d'entre eux.

Par ailleurs, l'on a pu constater que la force de rétention développée par ces bagues connues est fortement décroissante en fonction du nombre d'introductions et d'extractions; ainsi une bague du type de celle représentée aux figures 1 et 2, donnant une force de rétention de l'ordre de 80 N (8 kg.f) lors de la première utilisation, ne fournit plus qu'une force de l'ordre de 25 N (2,5 kg.f) après 100 essais. Cette dérive est un défaut grave en pratique dans le domaine aéronautique puisqu'elle conduit à une incertitude sur l'efficacité réelle des bagues en place.

En outre, la force d'introduction nécessaire pour mettre en place ces bagues connues lors des premières utilisations (de l'ordre de 80 N (8 kg.f) est généralement considérée comme trop élevée par les constructeurs aéronautiques et une force de l'ordre de 3 à 4 kg.f semblerait constituer un meilleur compromis permettant d'obtenir à la fois une bonne rétention et des conditions de mise en place satisfaisantes.

La présente invention se propose de remedier aux défauts sus-évoqués des dispositifs connus.

Un objectif de l'invention est en particulier d'écarter les risques d'arrachement de la bague lors des introductions ou extractions, sans pour autant devoir accroître la profondeur de la gorge dans laquelle ladite bague est logée.

Un autre objectif de l'invention est de réduire considérablement les variations de la force de rétention et/ou de la force de pénétration au cours des utilisations successives.

Un autre objectif est de fournir un dispositif susceptible d'être ajusté de sorte que la force de pénétration soit inférieure à celle des dispositifs connus et en particulier d'un ordre de grandeur de 20 à 40 N (2 à 4 kg.f).

Un autre objectif de l'invention est d'autoriser un gain de poids notable, ce qui est particulièrement intéressant dans le domaine aéronautique.

A cet effet, le dispositif de fixation imperdable visé par l'invention est du type comprenant, d'une part, un organe doté d'une tige sur laquelle est ménagée une gorge annulaire, d'autre part, une bague, fendue transversalement pour lui conférer une faculté de déformation élastique dans le sens circonférentiel et logée dans la gorge précitée de façon, dans un état de repos, en venir en saillie par rapport à la surface de la tige et, dans un état comprimé, à se trouver effacée à l'intérieur de la gorge; selon la présente invention, ledit dispositif est caractérisé en ce que:

- la bague possède une section transversale ayant une faculté de déformation élastique en vue de pouvoir subir un allongement transversal et une contraction radiale lorsque la bague est comprimée,

- ladite bague est logée dans la gorge avec un jeu latéral apte à permettre à sa section transversale de se déformer librement lorsqu'elle est comprimée entre son état de repos et son état comprimé.

La bague peut en particulier présenter une section transversale évidée dans sa partie située en regard du fond de la gorge, de sorte que l'épaisseur du matériau constitutif de ladite bague soit inférieure à la hauteur de sa section.

Selon un mode de réalisation préférentiel, la bague est formée d'une épaisseur -e- de matériau très approximativement constante sur la majeure partie de sa section transversale, ladite section transversale possédant une partie médiane prolongée, de part et d'autre, par des ailes inclinées vers le fond de la gorge.

Ainsi, le dispositif de l'invention est doté d'une bague présentant une double élasticité:

. d'une part, comme dans les dispositifs connus, une élasticité circonférentielle d'ensemble, autorisée par sa fente transversale,

. d'autre part, une élasticité propre de sa section transversale qui est apte à se déformer et à subir un allongement transversal et une contraction radiale lorsqu'elle est comprimée.

Comme on le comprendra mieux plus loin, cette double élasticité permet d'associer les résultats et avantages suivants: suppression des risques d'arrachement, tout en ayant la possibilité de diminuer la profondeur de la gorge, force de rétention ne subissant que de faibles variations au cours des introductions successives, force d'introduction moins élevée, allègement de la baque dans le cas préférentiel de la section transversale évidée.

L'invention s'applique en particulier à des organes possédant à l'extrémité de leur tige un filetage pour la mise en place d'un écrou ou d'un système d'écrou; la gorge annulaire est située au voisinage de la base de ce filetage, lequel peut le cas échéant comporter sur sa portion extrême un perçage diamétral pour la mise en place d'une goupille fournissant une sécurité supplémentaire.

D'autres caractéristiques de l'invention se dégageront de la description qui suit en référence aux dessins annexés qui en présentent un mode de réalisation préférentiel et des variantes; sur ces dessins:

- les figures 1 et 2, déjà commentées, illustrent un dispositif de fixation de type connu,

- la figure 3 est une vue de profil, avec coupe partielle, d'un dispositif de fixation conforme à l'invention,

- la figure 4 représente un détail de la figure 3 à échelle dilatée,

- les figures 5 et 6 sont des vues d'une bague conforme à l'invention, respectivement en coupe par un plan AA' et par un plan BB',

- la figure 7 est un schéma illustrant le dispositif en cours de mise en place,

- les figures 8, 9 et 10 sont des vues en coupe de variantes de bagues.

(Il est rappelé que le terme "transversal" se réfère à la bague, c'est-à-dire à une section par un plan contenant l'axe autour duquel ladite bague s'étend).

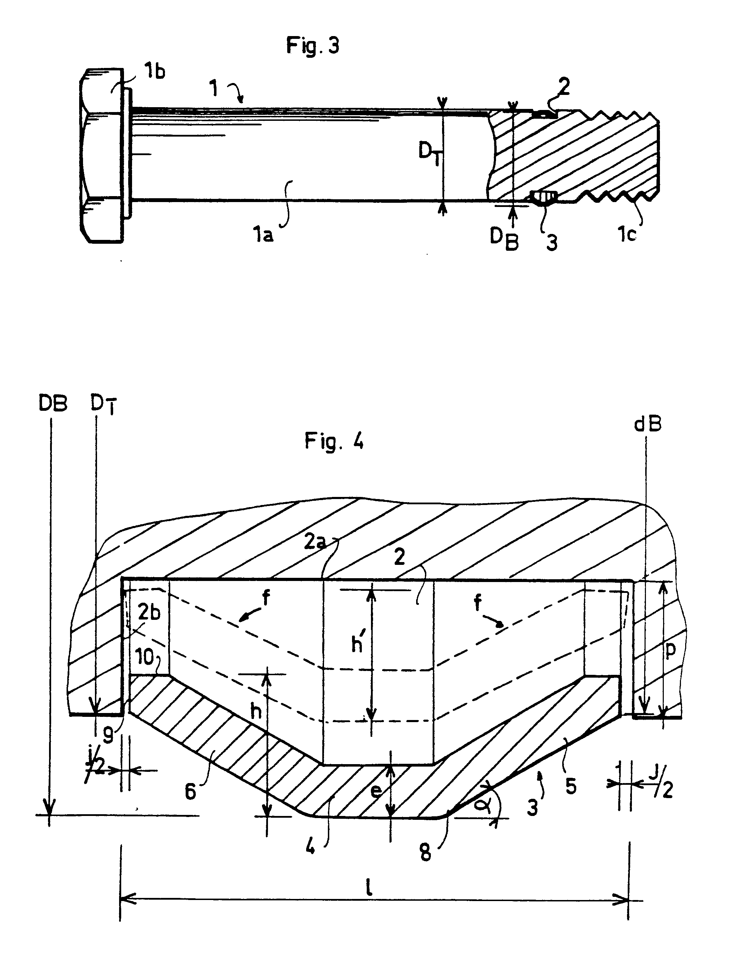

Le dispositif de fixation représenté à titre d'exemple aux figures 3 et 4 comprend un boulon 1 composé d'une tige cylindrique 1a, d'une tête 1b et, à l'extrémité opposée, d'un filetage 1c muni le cas échéant d'un perçage pour la mise en place d'une goupille.

A la base du filetage 1c, le boulon comporte une gorge annulaire 2 de section rectangulaire, comprenant un fond cylindrique 2a bordé par des faces planes 2b; cette gorge peut être réalisée par décolletage.

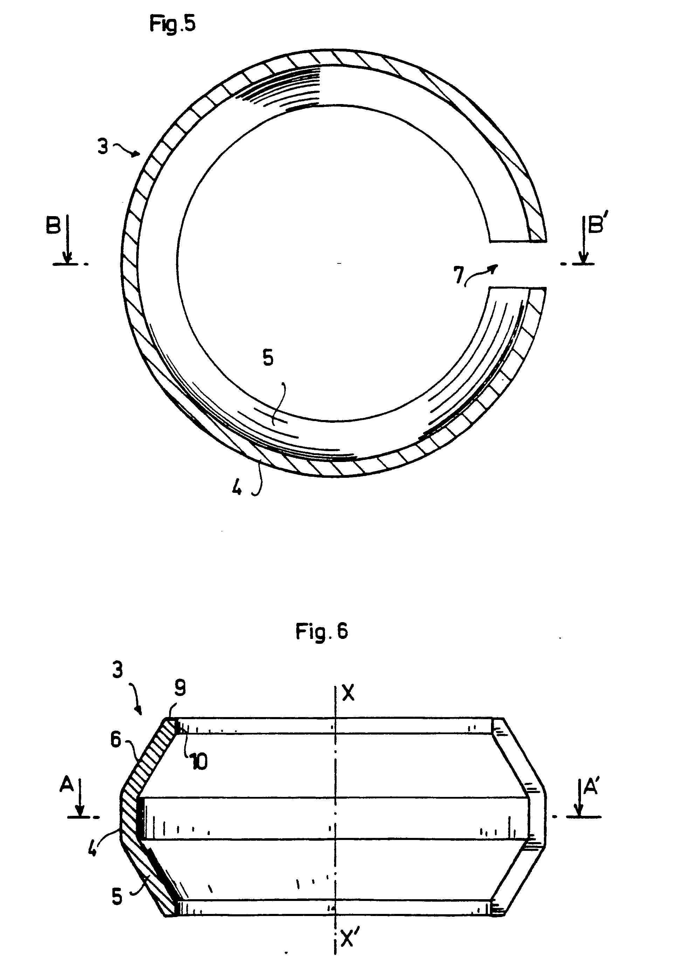

Cette gorge est équipée d'une bague annulaire 3 qui est représentée à la figure 5 en coupe axiale par un plan perpendiculaire à l'axe du boulon et à la figure 6 en coupe transversale par un plan orthogonal au précédent.

La bague annulaire 3 est formée d'une épaisseur -e- sensiblement constante, d'un matériau ayant une élasticité propre, en particulier acier inoxydable "Z6 Cu N 17.04"; elle peut le cas échéant être réalisée en d'autres matériaux (matières synthétiques, élastomères...).

Cette bague possède une partie médiane de forme cylindrique 4 qui s'étend parallèlement à son axe XX' et deux ailes identiques 5 et 6 inclinées vers cet axe et de forme tronconique. Sa section transversale présenté donc, comme l'illustre la figure 4, une partie évidée située en regard du fond 2a de la gorge 2 (la hauteur -h- de ladite section transversale étant très supérieure à l'épaisseur de matériau -e-).

Cette forme confère à la section transversale de la bague une faculté de déformation élastique (dans le sens des flèches f de la figure 4), rendant ladite section apte à subir, sous l'effet d'une compression centripète, un allongement transversal (dans une direction parallèle à XX') et une contraction radiale réduisant la hauteur -h- de ladite section à une valeur inférieure -h'-.

De plus, la bague 3 est dotée en une zone de sa périphérie d'une fente transversale 7 qui lui confère une faculté de déformation élastique dans le sens circonférentiel.

Les deux ailes 5 et 6 de la bague sont en particulier inclinées par rapport à la partie médiane 4, d'un angle $\alpha$ compris entre environ 20° et 40°, notamment de l'ordre de 30°. Chaque aile se raccorde à la partie médiane, au niveau de la surface externe de la bague, par un arrondi tel que 8.

Les ailes 5 et 6 possèdent chacune un chant d'extrémité comportant, latéralement, une face frontale plane 9 et, intérieurement, une face cylindrique 10. Lorsque la bague se trouve à l'état de repos (non comprimé), ses faces frontales 9 sont situées dans des plans orthogonaux à l'axe XX' et les faces cylindriques 10 sont axées sur cet axe.

La bague 3 et la gorge 2 sont dimensionnées l'une par rapport à l'autre, de sorte que pour l'état de repos de la bague:
. les chants d'extrémité des ailes 5 et 6, et en particulier leur face plane 9, se trouvent entièrement situés à l'intérieur de la gorge sur toute la périphérie de la bague (diamètre $d_B$ au niveau des chants d'extrémité inférieur ou égal au diamètre $D_T$ de la tige de boulon),
- la partie médiane 4 fasse saillie de ladite gorge sur au moins un secteur de sa périphérie (diamètre externe $D_B$ de la partie médiane de la bague supérieur au diamètre $D_T$ de la tige du boulon),
- la bague soit logée dans la gorge avec un jeu latéral total -j- apte à permettre à sa section transversale de se déformer librement lorsqu'elle est comprimée.

De plus, la profondeur de la gorge est prévue pour autoriser un effacement total de la bague à l'intérieur de celle-ci, lorsqu'un effort de compression radial est appliqué à la bague; cet effort entraîne sous l'effet de la double élasticité de la bague, d'une part, une contraction diamétrale de celle-ci (élasticité circonférentielle), d'autre part, une contraction radiale de sa section (élasticité propre de la section transversale).

Dans ces conditions, la profondeur minimale nécessaire de la gorge 2 est notablement réduite par rapport à celle exigée par les bagues classiques telles que schématisées aux figures 1 et 2, et ce, malgré une insertion totale à l'état de repos des chants d'extrémité 9 et 10 à l'intérieur de la gorge 2. La double élasticité de la bague autorise en effet une contraction radiale plus importante pour la partie médiane 4, que pour les ailes latérales 5 et 6.

La bague 3 peut être réalisée par tout procédé connu: décolletage dans la masse, roulage à partir d'un profilé extrudé, etc...; elle est mise en place dans la gorge grâce à une expansion autorisée par son élasticité.

Afin de fixer des ordres de grandeurs, sont fournis ci-après à titre non limitatif les paramètres dimensionnels du dispositif représenté.

La tige des boulons couramment utilisés en aéronautique présente un diametre $D_T$ compris entre environ 4 et 20 mm; la gorge peut présenter une largeur -l- comprise entre environ 2 et 4 mm et une profondeur -p- comprise entre environ 0,3 et 1,5 mm.

A l'état de repos, la hauteur -h- de la section de la bague peut être comprise entre environ 0,3 et 1,5 mm; la largeur de la bague est prévue de sorte que le jeu latéral total -j- entre ladite bague et la gorge soit sensiblement compris entre 1/10 mm et 3/10 mm. L'épaisseur -e- de la bague peut être comprise entre 1,5/10 et 4/10 mm.

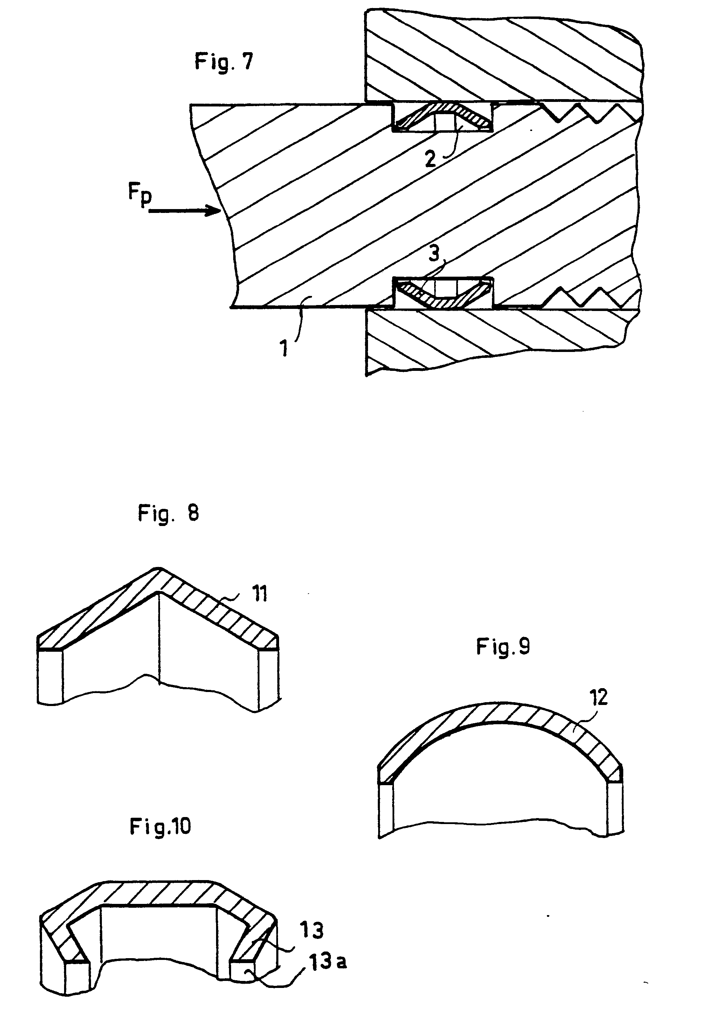

La figure 7 illustre la mise en place du dispositif dans le trou d'un assemblage. On a pu constater que la force de pénétration Fp nécessaire pour comprimer une bague du type sus-évoqué entre son état de repos et un état comprimé dans lequel elle se trouve effacée dans la gorge 2, est de l'ordre de 30 à 40 N (3 à 4 kg.f). Des essais successifs effectués sur des bagues de ce type ont fourni une force de pénétration égale à 38 N (3,8 kg.f) lors de la première pénétration et à 34 N (3,4 kg.f) lors de la 100e. Ainsi la force de pénétration est inférieure à celle des dispositifs classiques et peut être aisément ajustée dans la plage souhaitée dans le domaine aéronautique. De plus, cette force et la force de rétention qui lui est égale ne subissent que de faibles variations au cours des utilisations successives.

Les figures 8, 9 et 10 présentent en coupe partielle des variantes de formes de bague à section évidée. Toutes ces bagues sont fendues transversalement et disposées dans la gorge du boulon de façon analogue à celle décrite précédemment.

La bague représentée à la figure 8 est formée de deux ailes tronconiques telles que 11, inclinées vers l'axe de la bague; ces deux ailes se raccordent entre elles par un arrondi au niveau de la surface externe.

La bague représentée à la figure 9 présente une section 12 en forme de secteur de couronne; cette couronne peut être bordée par des cercles ou par d'autres courbes.

La bague représentée à la figure 10 est similaire à celles des figures 3 à 6, mais comporte deux jambes supplémentaires telles que 13, raccordées à l'extrémité des ailes. Ces jambes forment un retour élastique vers l'intérieur et leur chant d'extrémité 13a est cylindrique.

## Revendications

1. Dispositif de fixation imperdable, du type comprenant, d'une part, un organe (1) doté d'une tige (1a) sur laquelle est ménagée une gorge annulaire (2), d'autre part, une bague (3), fendue transversalement (7) pour lui conférer une faculté de déformation élastique dans le sens circonférentiel et logée dans la gorge (2) précitée de façon, dans un état de repos, à venir en saillie par rapport à la surface de la tige et, dans un état comprimé, à se trouver effacée à l'intérieur de la gorge, ledit dispositif de fixation étant caractérisé en ce que:
- la bague (3) possède une section transversale ayant une faculté de déformation élastique en vue de pouvoir subir un allongement transversal et une contraction radiale lorsque la bague est comprimée,
- ladite bague est logée dans la gorge (2) avec un jeu latéral (j) apte à permettre à sa section transversale de se déformer librement lorsqu'elle est comprimée entre son état de repos et son état comprimé.

2. Dispositif selon la revendication 1, caractérisé en ce que la bague (3) présente une section transversale évidée dans sa partie située en regard du fond (2a) de la gorge, de sorte que l'épaisseur (e) du matériau constitutif de ladite bague soit inférieure à la hauteur (h) de sa section.

3. Dispositif selon la revendication 2, caractérisé en ce que la bague (3) est formée d'une épaisseur -e- de matériau très approximativement constante sur la majeure partie de sa section transversale, ladite section transversale possédant une partie médiane (4) prolongée, de part et d'autre, par des ailes (5, 6) inclinées vers le fond (2a) de la gorge.

4. Dispositif selon la revendication 3, caractérisé en ce que la bague (3) est agencée dans la gorge (2) de sorte que, à l'état de repos, ses ailes inclinées (5, 6) possèdent des chants d'extrémité situés à l'intérieur de la gorge sur toute la périphérie de la bague, la partie mediane (4) faisant saillie de ladite gorge sur au moins un secteur de sa périphérie.

5. Dispositif selon la revendication 4, dans lequel la gorge (2) présente une section transversale sensiblement rectangulaire bordée par des faces planes (2b), caractérisé en ce que chaque chant d'extrémité de la bague comporte, latéralement, une face frontale plane (9) située en regard de la face plane correspondante (2b) de la gorge et, intérieurement, une face cylindrique (10) située en regard du fond (2a) de la gorge.

6. Dispositif de fixation selon l'une des revendications 3, 4 ou 5, caractérisé en ce que la bague (3) possède:
. une partie médiane (4) de forme cylindrique ayant, à l'état de repos, un diamètre ($D_B$) supérieur au diamètre ($D_T$) de la tige (1a),
. deux ailes identiques (5, 6) prolongeant la partie médiane et de même épaisseur que celle-ci, chaque aile ayant une forme tronconique de diamètre ($d_B$) au niveau des chants d'extrémité, inférieur ou égal au diamètre ($D_T$) de la tige.

7. Dispositif selon la revendication 6, caractérisé en ce que les deux ailes (5, 6) de la bague sont inclinées par rapport à la partie médiane (4) d'un angle compris entre environ 20 et 40°.

8. Dispositif selon l'une des revendications 6 ou 7, caractérisé en ce que chaque aile (5, 6) se raccorde à la partie médiane (4), au niveau de la surface externe de la bague, par un arrondi (8).

9. Dispositif selon l'une des revendications 6 à 8, dans lequel la tige (1a) présente un diamètre ($D_T$) compris entre environ 4 et 20 mm et la gorge (2) une largeur (1) comprise entre environ 2 et 4 mm et une profondeur (p) comprise entre environ 0,3 et 1,5 mm, caractérisé en ce que, à l'état de repos:
. la hauteur (h) de la section de la bague (3) est comprise entre environ 0,3 et 1,5 mm,
. le jeu latéral total (j) entre la bague et la gorge est sensiblement compris entre 1/10 mm et 3/10 mm.

10. Dispositif selon l'une des revendications 3 à 9, caractérisé en ce que la bague (3) est réalisée en acier d'épaisseur (e) sensiblement comprise entre 1,5/10 et 4/10 mm.

11. Dispositif selon l'une des revendications précédentes, dans lequel l'organe (1) possède un filetage (10) à l'extrémité de sa tige, la gorge annulaire (2) étant disposée au voisinage de la base de ce filetage.

12. Bague annulaire fendue transversalement, destinée à équiper un dispositif conforme à l'une des revendications précédentes, caractérisée en ce quelle possède une section transversale ayant une faculté de déformation élastique en vue de pouvoir subir un allongement transversal et une contraction radiale lorsque la bague est comprimée.

13. Bague selon la revendication 12, possédant une section transversale telle que définie selon l'une des revendications 2 à 9.

## Revendications

1. Nicht verlierbare Befestigungsvorrichtung der Art, die einerseits eine Einheit (1) mit einem Schaft (1a) umfaßt, an dem eine ringförmige Aussparung (2) vorgesehen ist, und andererseits einen Ring (3), mit einem Querschlitz (7), der ihn zu elastischer Verformung in Umfangsrichtung befähigt, wobei der besagte Ring so in der vorstehend genannten Aussparung (2) angeordnet ist, daß er im Ruhezustand im Verhältnis zu der Oberfläche des Schaftes vorsteht und sich im komprimierten Zustand im Inneren der Aussparung befindet, und zwar ist die besagte Befestigungsvorrichtung dadurch gekennzeichnet,

- daß der Ring (3) einen Querschnitt besitzt, so daß sich der Ring im komprimierten Zustand in Querrichtung verlängern und in Radialrichtung zusammenziehen kann,

- daß der besagte Ring in der Aussparung (2) mit einem Seitenspiel (1) angeordnet ist, das so beschaffen ist, daß es unbehinderte Verformung des Querschnitts gestattet, wenn dieser zwischen seinem Ruhezustand und seinem komprimierten Zustand komprimiert wird.

2. Vorrichtung im Einklang mit Anspruch 1, dadurch gekennzeichnet, daß der Ring (3) in einem in dem Boden (2a) der Aussparung gegenüberliegenden Bereich einen ausgesparten Querschnitt aufweist, so daß die Dicke (e) des den besagten Ring bildenden Materials geringer ist als die Höhe (h) seines Querschnitts.

3. Einrichtung im Einklang mit Anspruch 2, dadurch gekennzeichnet, daß der Ring (3) eine Materialdicke -e- aufweist, die innerhalb des größeren Bereichs seines Querschnitts sehr annähernd konstant ist, wobei der besagte Querschnitt einen Mittelbereich (4) besitzt, der zu beiden Seiten durch auf den Boden (2a) der Aussparung zu geneigte Flügel (5, 6) fortgesetzt ist.

4. Vorrichtung im Einklang mit Anspruch 3, dadurch gekennzeichnet, daß der Ring (3) so in der Aussparung (2) angeordnet ist, daß seine geneigten Flügel (5, 6) im Ruhezustand Endbereiche besitzen, die sich entlang der gesamten Peripherie des Ringes im Innern der Aussparung befinden, während der mittlere Bereich (4) innerhalb mindestens eines Sektors seiner Peripherie aus der besagten Aussparung vorsteht.

5. Vorrichtung im Einklang mit Anspruch 4, bei der die Aussparung (2) einen im wesentlichen rechteckigen durch ebene Flächen (2b) begrenzten Querschnitt aufweist, dadurch gekennzeichnet, daß jeder Endbereich des Ringes an der Seite eine ebene Stirnfläche (9) besitzt, die der entsprechenden ebenen Fläche (2b) der Aussparung gegenüber ist, sowie eine zylindrische Fläche (10), die sich dem Boden (2a) der Aussparung gegenüber befindet.

6. Befestigungsvorrichtung im Einklang mit einem der Ansprüche 3, 4 oder 5, dadurch gekennzeichnet, daß der Ring (3) die folgenden Bereiche besitzt:

. einen Mittelbereich (4) von zylindrischer Form, der im Ruhezustand einen Durchmesser ($D_B$) aufweist, der größer ist als der Durchmesser ($D_T$) des Schaftes (1a),

. zwei gleichartige Flügel (5, 6), die den Mittelbereich fortsetzen und ebenso dick sind wie dieser, wobei jeder Flügel eine Stumpfkegelform besitzt, deren Durchmesser ($D_T$) an den Endbereichen geringer oder ebenso groß ist wie der Durchmesser ($D_T$) des Schaftes.

7. Vorrichtung im Einklang mit Anspruch 6, dadurch gekennzeichnet, daß die beiden Flügel (5, 6) des Ringes im Verhältnis zu dem Mittelbereich (4) in einem Winkel zwischen ungefähr 20 und 40° geneigt sind.

8. Vorrichtung im Einklang mit einem der Ansprüche 6 oder 7, dadurch gekennzeichnet, daß jeder Flügel (5, 6) an der Außenfläche des Ringes über eine Rundung (8) an den Mittelbereich (4) anschließt.

9. Vorrichtung im Einklang mit einem der Ansprüche 6 bis 8, bei der der Schaft (1a) einen Durchmesser ($D_T$) zwischen ungefähr 4 und 20 mm aufweist und die Aussparung (2) eine Weite (1) von ungefähr 2 bis 4 mm und eine Tiefe (p) von ungefähr 0,3 bis 1,5 mm besitzt, dadurch gekennzeichnet, daß im Ruhezustand

. die Höhe (h) des Querschnitts des Ringes (3) ungefähr von 0,3 bis 15 mm ausmacht und

. das Gesamtseitenspiel (j) zwischen dem Ring und der Aussparung im wesentlichen von 1/10 mm bis 3/10 mm beträgt.

10. Vorrichtung im Einklang mit einem der Ansprüche 3 bis 9, dadurch gekennzeichnet, daß der Ring (3) aus Stahl besteht, dessen Dicke (e) im wesentlichen von 1,5/10 bis 4/10 mm beträgt.

11. Vorrichtung im Einklang mit einem der vorhergehenden Ansprüche, wobei die Einheit (1) am Ende ihres Schaftes ein Gewinde (1c) aufweist und sich die ringförmige Aussparung (2) in der Nähe des Fußes dieses Gewindes befindet.

12. Kreisförmiger Ring mit Querschlitz für eine einem der vorhergehenden Ansprüche entsprechende Vorrichtung, dadurch gekennzeichnet, daß er einen elastisch verformbaren Querschnitt besitzt, der bei Kompression des Ringes Querverlängerung und radiale Zusammenziehung gestattet.

13. Ring im Einklang mit Anspruch 12, mit einem Querschnitt, wie er in den Ansprüchen 2 bis 9 definiert ist.

**Claims**

1. Fixing device that cannot be lost of the type comprising, on the one hand, an element (1) having a shaft (1a) on which is provided an annular recess (2), and on the other hand a ring (3) with a transverse slot (7) conferring to it a capacity for elastic deformation in the circumferential sense, said ring being located within the above recess (2) in such a way that in a state of rest it projects in relation to the surface of the shaft while in a compressed state it is ensconced within the recess, said fixing device being characterised in that

- ring (3) has a cross-section capable of elastic deformation with a view to undergoing transverse extension and radial contraction when the ring is compressed,
- said ring is located in recess (2) subject to a lateral play (j) such as to permit its cross-section to deform freely when it is compressed between its state of rest and its compressed state.

2. Device according to Claim 1, characterised in that the ring (3) has a cross-section which in the part opposite base (2a) of the recess is hollowed out so that thickness (e) of the material of which said ring consists is smaller than height (h) of its section.

3. Device according to Claim 2, characterised in that ring (3) has a material thickness -e- very approximately constant throughout most of its cross-section, said cross-section having a middle zone (4) extended on either side by wings (5, 6) inclined towards base (2a) of the recess.

4. Device according to Claim 3, characterised in that ring (3) is so arranged in recess (2) that in its state of rest its inclined wings (5, 6) have end parts located inside the recess throughout the entire periphery of the ring, with middle zone (4) projecting from said recess throughout at least a sector of its periphery.

5. Device according to Claim 4, in which recess (2) has a substantially rectangular cross-section bounded by plane faces (2b), characterised in that each end part of the ring has laterally a plane front face (9) situated opposite the corresponding plane face (2b) of the recess and, on the inside, a cylindrical face (10) situated opposite base (2a) of the recess.

6. Fixing device according to one of Claims 3, 4 or 5, characterised in that ring (3) has
. a middle zone (4) of cylindrical shape which has in its state of rest a diameter ($D_B$) larger than the diameter ($D_T$) of shaft (1a),
. two identical wings (5, 6) extending the middle zone and of the same thickness of the latter, each wing having a truncated form, the diameter ($D_B$) of which is at the level of the end parts smaller than or equal to diameter ($D_T$) of the shaft.

7. Device according to Claim 6, characterised in that the two wings (5, 6) of the ring are inclined in respect to the middle zone (4) by an angle between approximately 20 and 40°.

8. Device according to one of Claims 6 or 7, characterised in that each wing (5, 6) is, at the level of the external surface of the ring, joined to the middle zone (4) by a rounded section (8).

9. Device according to one of Claims 6 to 8, in which shaft (1a) has a diameter ($D_T$) between approximately 4 and 20 mm and and recess (2) has a width (1) between approximately 2 and 4 mm and a depth (p) between approximately 0.3 and 1.5 mm, characterised in that in the state of rest
. height (h) of the section of ring (3) amounts to between approximately 0.3 and 1.5 mm
. the total lateral play (j) between the ring and the recess amounts substantially to between 1/10 mm and 3/10 mm.

10. Device according to one of Claims 3 to 9, characterised in that ring (3) is made of steel with a thickness (e) substantially between 1.5/10 and 4/10 mm.

11. Device according to one of the preceding claims, in which the element (1) has a thread (1c) at the end of its shaft, the annular recess (2) being arranged close to the base of this thread.

12. Annular ring with a transverse slot, designed to form part of a device according to one of the preceding claims, characterised in that it has a cross-section capable of elastic deformation with a view to being able to undergo transverse extension and radial contraction when the ring is compressed.

13. Ring according to Claim 12, having a cross-section such as defined according to one of Claims 2 to 9.

Fig. 1

Fig. 2

Fig. 3

Fig. 4

0 162 485

**Fig.5**

**Fig. 6**

5

**Fig. 7**

$F_p$

2

3

1

**Fig. 8**

11

**Fig. 9**

12

**Fig. 10**

13

13a